# EUROPEAN PATENT APPLICATION

(11) **EP 4 817 554 A1**
(43) Date of publication of application: **07.10.2026**
(21) Application number: 24897666.4
(22) Date of filing: 28.11.2024
(51) Int. Cl.: A61C 7/08

(54) **PAD-TYPE MOUTHPIECE CORRECTION DEVICE**

(30) Priority: 30.11.2023 JP 2023202928
(71) Applicant: Kim, Han-Joon, Ashiya-shi Hyogo 659-0093 (JP)
(72) Inventor: Kim, Han-Joon, Ashiya-shi Hyogo 659-0093 (JP)
(74) Representative: Witte, Weller & Partner Patentanwälte mbB
(86) International application number: PCT/JP2024/042228
(87) International publication number: WO 2025/115982

(57) **Abstract**

A pad-type mouthpiece orthodontic device 10 according to the present invention includes: a horseshoe-shaped base portion 11 conforming to the shape of a dental arch; a pad pair portion for individually covering each tooth of the dental arch or collectively covering plural teeth of the dental arch; and a connection portion 13 that fixes the pad pair portion to the base portion. The base portion 11 is divided into a plurality of base segments based on desired unit regions, and the base segments each constitute an orthodontic block together with the connection portion and the pad pair portion. The base segment of the orthodontic block is configured to have elasticity or inelasticity specific to the block.

## Description

### TECHNICAL FIELD

The present invention relates to a pad-type mouthpiece orthodontic device to be used for orthodontic treatment in the orthodontic field.

### BACKGROUND ART

A major treatment method for orthodontics is a multibracket orthodontic treatment method in which brackets are bonded to the surfaces of teeth and a wire configured to apply orthodontic forces in desired directions to move the teeth is attached to the brackets whereby the elastic force of the wire is transmitted to the teeth to move the teeth. However, the multibracket orthodontic treatment method is a difficult treatment method that requires practitioners to have appropriate skill and experience. Further, the orthodontic device is constantly fitted on the surfaces of patient's teeth during a two- to three-year treatment period, so that many patients feel reluctant to wear the orthodontic device due to daily life inconveniences such as in oral cleaning, conversation, eating, appearance and the like. In recent years, therefore, attention is focused on a sheet-type mouthpiece orthodontic device produced by preparing a posttreatment setup model from a patient's dentition model and crimping a single resin sheet in conformity with the shape of the model.

However, the sheet-type mouthpiece orthodontic device is produced based on a predictive post-movement dentition, and fitted on an actual dental arch before the movement. Therefore, the device is liable to be distorted due to a three-dimensional shape difference between the predictive dentition and the actual dental arch. Accordingly, the device is partly tightened or partly lifted, thereby suffering from lack of conformity. This makes it difficult to sufficiently apply the orthodontic forces to the teeth in proper directions.

Since a material for the sheet-type mouthpiece orthodontic device is made of a single thin homogeneous resin sheet, the orthodontic forces to be applied to the teeth cannot be precisely adjusted by changing the elasticity and the thickness of the wire unlike in the multibracket orthodontic treatment. Therefore, it is difficult to cope with the excessive or insufficient application of the orthodontic forces to the teeth or the lift or the deformation of the device itself by setting the movement amounts and the movement directions of the teeth, i.e., it is difficult to ensure the proper application of the orthodontic forces and the stable fit of the device.

### RELATED ART DOCUMENT

### PATENT DOCUMENT

PTL 1: Japanese Patent No. 6029220
PTL 2: Japanese Utility Model No. 3200778

### SUMMARY OF INVENTION

### PROBLEM TO BE SOLVED BY INVENTION

The inventor of the present invention invented a novel mouthpiece-type removable orthodontic device, which includes an inelastic horseshoe-shaped base portion covering a dental arch occlusal surface, and a pair of outer and inner pads or front and back pads that are each connected to the base portion via a metal wire or an elastic body such as of a resin having a sufficient elastic force and conform to the labial (buccal) surface and the lingual surface of each tooth, and is adapted to grip the tooth between the pair of pads to move the tooth to a desired position by utilizing the gripping elastic force of the pads (WO 2021/246495 A1).

A feature of the device is that the pads which grip minimum areas of each tooth necessary to move the tooth from the labial (buccal) and lingual sides of the tooth, i.e., from the front and back sides (the outer and inner sides) of the tooth, are each connected to the base portion via the elastic body. Therefore, an unnecessary internal stress can be prevented which may otherwise occur due to interference with a neighboring orthodontic force, and a desired orthodontic force can be more precisely applied to each tooth.

It is an object of the present invention to provide a pad-type mouthpiece orthodontic device improved over the previously proposed orthodontic device and having a novel structure excellent in productivity and orthodontic treatment effect.

### SOLUTION TO PROBLEM

To achieve the aforementioned object, the present invention provides a pad-type mouthpiece orthodontic device, which includes: a horseshoe-shaped base portion conforming to the shape of a dental arch; a pad pair portion for individually covering each tooth of the dental arch or collectively covering plural teeth of the dental arch; and a connection portion that fixes the pad pair portion to the base portion; wherein the base portion is divided into a plurality of base segments based on desired unit regions, and the base segments each constitute an orthodontic block together with the connection portion and the pad pair portion; wherein the base segment of the orthodontic block is configured to have elasticity or inelasticity specific to the block.

In the pad-type mouthpiece orthodontic device according to the present invention, the pad pair portion may include a pad pair conforming to a surface of a tooth crown, and including an outer tooth surface pad that covers the outer side (the labial side or the buccal side) of the tooth crown and an inner tooth surface pad that covers the inner side (the lingual side) of the tooth crown, centering on the tooth crown.

In the pad-type mouthpiece orthodontic device according to the present invention, the connection portion may include an outer connection portion that fixes the outer tooth surface pad to the base portion and an inner connection portion that fixes the inner tooth surface pad to the base portion. The connection portion may have a predetermined elasticity so that the outer connection portion can elastically urge the outer tooth surface pad with respect to the base portion in a direction such as to press the tooth surface inward and the inner connection portion can elastically urge the inner tooth surface pad with respect to the base portion in a direction such as to press the tooth surface outward.

In the pad-type mouthpiece orthodontic device according to the present invention, at least one of the outer tooth surface pad and the inner tooth surface pad may have elasticity such that the tooth surface pad can elastically urge itself toward the tooth surface.

In the pad-type mouthpiece orthodontic device according to the present invention, the base portion, the pad pair portion and the connection portion may be integrally formed.

In the pad-type mouthpiece orthodontic device according to the present invention, the base portion, the pad pair portion and the connection portion may be integrally formed of a resin material.

In the pad-type mouthpiece orthodontic device according to the present invention, the base portion and the pad pair portion may be made of a resin material, and the connection portion may be made of a metal material.

In the pad-type mouthpiece orthodontic device according to the present invention, the base portion may have a boundary that extends in a direction intersecting a dental arch extending direction and divides the base portion based on the desired unit regions.

In the pad-type mouthpiece orthodontic device according to the present invention, the boundary may include a division end surface that physically divides the base portion.

In the pad-type mouthpiece orthodontic device according to the present invention, division end surfaces of each adjacent two of the base segments may be connected to each other via an elastic body.

In the pad-type mouthpiece orthodontic device according to the present invention, the boundary may include a joint portion between a base segment having a relatively large cross-sectional area and a base segment having a relatively small cross-sectional area.

In the pad-type mouthpiece orthodontic device according to the present invention, a predetermined base segment out of the plurality of base segments may be an inelastic body having inelasticity.

In the pad-type mouthpiece orthodontic device according to the present invention, the inelastic base segment may be made of a resin material, and may have a greater volume so as to be imparted with the inelasticity.

In the pad-type mouthpiece orthodontic device according to the present invention, base segments to be located on left and right posterior portions of the dental arch out of the base portion may be respectively formed with interocclusal projections on the occlusal surfaces thereof so as to ensure a proper occlusal state with respect to the occlusal surface of an opposed dental arch or the occlusal surface of the base portion of an orthodontic device fitted on the opposed dental arch, and a base segment to be located on an anterior portion of the dental arch out of the base portion may be formed with an interocclusal projection on the occlusal surface thereof so as to ensure a proper occlusal state with respect to the occlusal surface of the opposed dental arch or the occlusal surface of the base portion of the orthodontic device fitted on the opposed dental arch.

A pad-type mouthpiece orthodontic device according to another embodiment of the present invention includes: a horseshoe-shaped base portion conforming to the shape of a dental arch; a pad pair portion for individually covering each tooth of the dental arch or collectively covering plural teeth of the dental arch; and a connection portion that fixes the pad pair portion to the base portion; wherein the base portion, the connection portion and the pad pair portion are integrally formed of a resin material containing a shape memory resin, and the sizes, the thicknesses and the shapes of the base portion, the connection portion and the pad pair portion are variously set so that a part of the base portion connected to the connection portion is configured to have inelasticity and the connection portion and the pad pair portion are each configured to have a specific elasticity.

A pad-type mouthpiece orthodontic device according to further another embodiment of the present invention includes: a horseshoe-shaped base portion conforming to the shape of a dental arch; a pad pair portion for individually covering each tooth of the dental arch or collectively covering plural teeth of the dental arch; and a connection portion that fixes the pad pair portion to the base portion; wherein the base portion is divided into a plurality of base segments based on desired unit regions, and the base segments each constitute an orthodontic block together with the connection portion and the pad pair portion; wherein the base segment of the orthodontic block is configured to have inelasticity specific to the block.

In the present invention, the term "elasticity" means a property such that, when a force is applied to an object, the object is deformed and, after the force is removed, the object restores its original shape. The term "inelasticity" means that an object hardly exhibits elasticity, but does not mean "plasticity." The term "elastic body" means an object that has a restoring force to restore its original shape when being deformed due to the application of a force. The term "inelastic body" means a hard object that, even if a force is applied thereto, is not deformed, but absorbs the force.

### EFFECTS OF INVENTION

According to the present invention, the pad-type mouthpiece orthodontic devices can be provided, which are excellent in productivity and orthodontic treatment effect.

In the present invention, the pad pair portion and the connection portion constitute an elastic layer having elasticity, and the base portion constitutes an inelastic layer having inelasticity in the orthodontic blocks. Therefore, the elastic layer exhibits an optimum orthodontic force on each tooth. A reaction to the orthodontic force from the tooth is blocked by the base portion serving as the inelastic layer. That is, the orthodontic blocks each have a double layer structure including the elastic layer and the inelastic layer. This makes it possible to individually apply orthodontic forces to the respective teeth and to block the reactions from the respective teeth to the neighboring teeth.

In the present invention, the teeth can be more accurately and more efficiently moved by properly and precisely setting the magnitudes and the directions of the required orthodontic forces.

Comparison with the conventional orthodontic treatment methods will be described below:
In the conventional multibracket orthodontic treatment method, the brackets bonded and fixed to the respective teeth are ligated with a horseshoe-shaped dental arch wire to move the teeth based on the shape of the arch wire by the elastic force of the attached arch wire, whereby the teeth and the dental arch shape are orthodontically corrected. Typically, the orthodontic treatment is started with a highly-elastic thin wire, which is later replaced with less-elastic thicker wires one by one to properly align the tooth arch stepwise.

A feature of the present invention as described in comparison with the multibracket orthodontic treatment method is that the pad portion of the orthodontic block covering the teeth corresponds to the brackets, and the base portion and the connection portion of the orthodontic block supporting the pad portion correspond to the arch wire. In the multibracket orthodontic treatment method, the orthodontic force can be exhibited only by the single arch wire attached to the brackets of the respective teeth, i.e., by a single kind of elastic force. In the present invention, in contrast, the orthodontic force can be exhibited in two ways by applying two kinds of elastic forces of the connection portion and the base portion to move the teeth and the dental arch.

In the multibracket orthodontic treatment method, only one arch wire can be attached to the brackets at one time, so that an orthodontic force of a single kind having the same property is applied to all the teeth including front teeth and molars. In the present invention, in contrast, the base portion and the connection portion are configured to have different elasticities based on the desired unit regions, so that the orthodontic force can be precisely adjusted, i.e., can be exhibited and applied in various ways.

In the multibracket orthodontic treatment method, only one arch wire can be attached to the brackets at one time, but the orthodontic force to be applied to the teeth can be adjusted by using arch wires having different elasticities for the replacement one by one. However, the sheet-type mouthpiece orthodontic device is entirely formed of a sheet of the same material having a uniform thickness, so that the orthodontic force can be exhibited based on the single kind of elastic force during the overall treatment period. Therefore, the effect of the present invention is to eliminate the restriction on the orthodontic force to be exhibited and applied in the existing sheet-type mouthpiece orthodontic method or the existing multibracket orthodontic method to thereby more precisely adjust the orthodontic amount for each tooth in various ways to optimally apply the orthodontic force to each tooth.

### BRIEF DESCRIPTION OF DRAWINGS

FIG. 1 is a schematic diagram of a pad-type mouthpiece orthodontic device according to one embodiment of the present invention, schematically illustrating a mandibular orthodontic device 10 to be fitted on the dental arch of a lower jaw by way of example as viewed from diagonally above in perspective.
FIG. 2 is a schematic plan view of the mandibular orthodontic device 10 as viewed from an occlusal side.
FIG. 3 is a schematic left side view of the mandibular orthodontic device 10 as viewed from a left side.
FIG. 4 is sectional views each schematically showing the fit (the fitting state) of the mandibular orthodontic device 10 on a molar MT when the orthodontic device 10 is fitted on the lower jaw dental arch.
FIG. 5 is a sectional view schematically showing the fit (the fitting state) of the mandibular orthodontic device 10 on a molar MT by way of another example when the orthodontic device 10 is fitted on the lower jaw dental arch.
FIG. 6 is schematic diagrams illustrating exemplary structures of a connection portion 13 that fixes a pad 12 to a base portion 11.
FIG. 7 is a schematic diagram showing another example of the connection portion 13 that connects the pad 12 to the base portion 11.
FIG. 8 is a side sectional view schematically showing further another example of the connection portion 13 that connects the pad 12 to the base portion 11.
FIG. 9 is perspective views each showing an exemplary structure of the connection portion 13.
FIG. 10 is a diagram illustrating a base portion 21 different in structure from that of the mandibular orthodontic device 10 according to the embodiment of the present invention.
FIG. 11 is perspective views showing exemplary structures of a joint member.
FIG. 12 is perspective views showing other exemplary structures of the joint member.
FIG. 13 is plan views each showing a part of the base portion 21 as viewed from the occlusal side.
FIG. 14 is a diagram showing an arrangement in which neighboring base segments 211 to 216 of the base portion 21 shown in FIG. 10 are connected to each other by joint members 23.
FIG. 15 is a schematic plan view illustrating a mandibular orthodontic device 30 according to another embodiment of the present invention as viewed from the occlusal side.
FIG. 16 is diagrams each schematically showing a state in which an extracted tooth space is closed with a joint member 32.

### DESCRIPTION OF EMBODIMENTS

Embodiments of the present invention will hereinafter be described in detail.

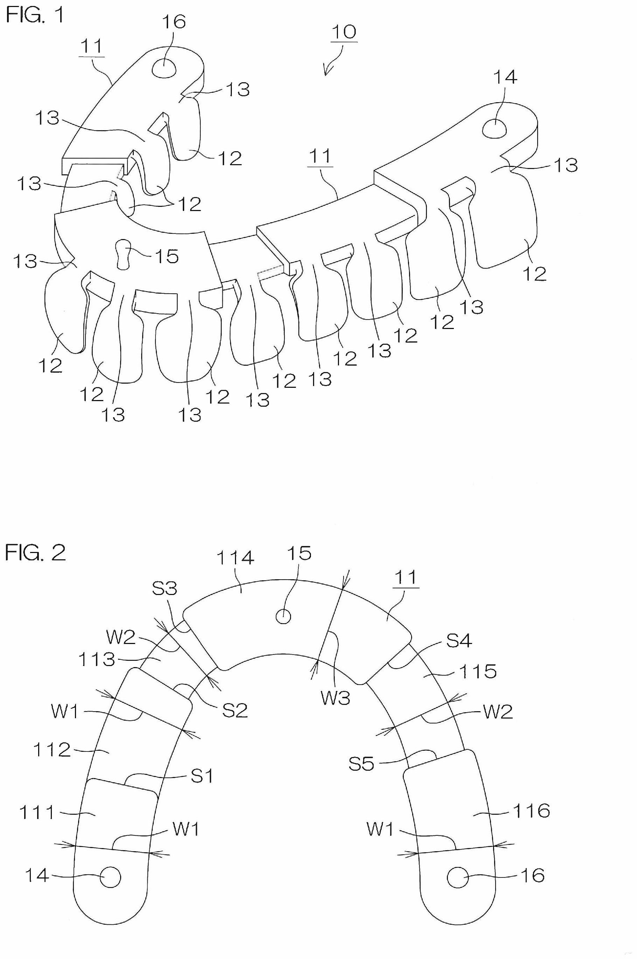

FIG. 1 is a schematic diagram of a pad-type mouthpiece orthodontic device according to one embodiment of the present invention, schematically illustrating a mandibular orthodontic device 10 to be fitted on the dental arch of a lower jaw by way of example as viewed from diagonally above in perspective.

The mandibular orthodontic device 10 includes a horseshoe-shaped base portion 11 conforming to the shape of the dental arch of the lower jaw, a plurality of pads 12 for covering the lower dental arch, and a plurality of connection portions 13 that respectively connect the pads 12 to the base portion 11 to fix the pads 12 to the base portion 11.

FIG. 2 is a schematic plan view of the mandibular orthodontic device 10 as viewed from an occlusal side, wherein only the base portion 11 is shown with the pads 12 and the connection portions 13 omitted to avoid complication.

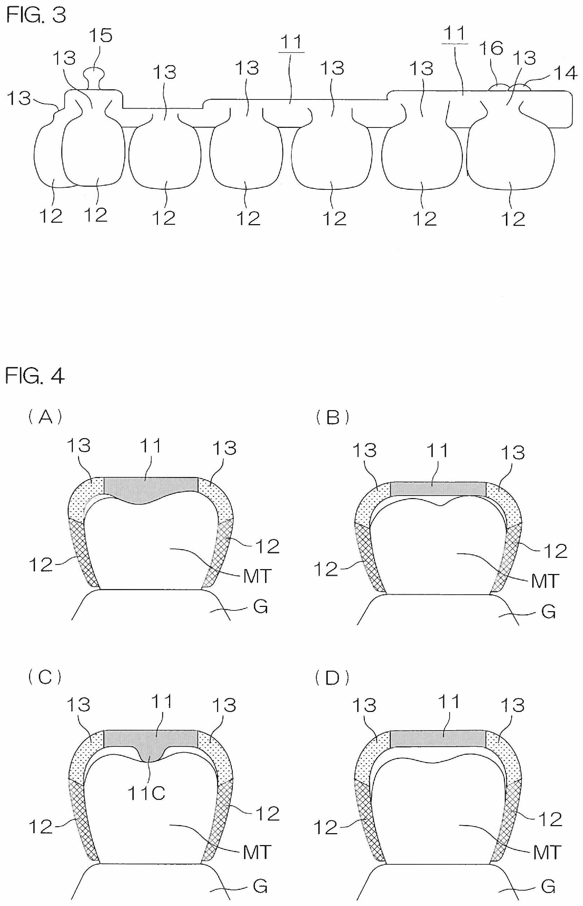

FIG. 3 is a schematic left side view of the mandibular orthodontic device 10 as viewed from a left side.

Referring to FIGS. 1 to 3, the horseshoe-shaped base portion 11 of the mandibular orthodontic device 10 conforming to the shape of the lower dental arch is divided into a plurality of base segments 111 to 116 based on a plurality of regions. The base segments 111 to 116 are provided with the pads 12 via the connection portions 13. Thus, the base segments 111 to 116 each constitute an orthodontic block together with the corresponding pads 12 and the corresponding connection portions 13 based on the unit region defined thereby.

The base segments 111 to 116 are each configured to have a predetermined width (as measured horizontally orthogonally to the longitudinal direction of the dental arch) and a predetermined thickness. Specifically, the base segment 111 has a width W1 and a thickness T1, as shown in FIG. 2, by way of example. The base segment 112 has a width W1 and a thickness T2 (< T1). The base segment 113 has a width W2 (< W1) and a thickness T3 (< T2). The base segment 114 has a width W3 (W2 < W3 < W1) and a thickness T4 (> T2). The base segment 115 has a width W2 and a thickness T3. The base segment 116 has a width W1 and a thickness T1.

Therefore, a step S1 defined in a thickness direction is provided along a boundary between the base segment 111 and the base segment 112. In FIG. 2, the step S1 is provided on the occlusal side (on the upper side in FIG. 2) of the base portion 11, but the step S1 may be provided on a side of the base portion 11 opposed to the dental arch opposite from the occlusal side. This may apply to steps S2 to S5 to be described later. That is, the base portion 11 may have a flat surface with no steps along boundaries between the base segments on the occlusal side. In another example, the base portion 11 may have steps on both the occlusal side and the side opposed to the dental arch.

A step S2 defined in the thickness direction and a widthwise direction is provided along a boundary between the base segment 112 and the base segment 113. A step S3 defined in the thickness direction and the widthwise direction is provided along a boundary between the base segment 113 and the base segment 114. A step S4 defined in the thickness direction and the widthwise direction is provided along a boundary between the base segment 114 and the base segment 115. A step S5 defined in the thickness direction and the widthwise direction is provided along a boundary between the base segment 115 and the base segment 116.

In this embodiment, the base portion 11 is entirely integrally formed of a relatively hard resin material having a predetermined elastic modulus. The base segments 111 to 116 of the base portion 11 are each configured to have the predetermined width and the predetermined thickness, and the steps S1 to S5 are provided along the boundaries between the neighboring base segments. Therefore, the base segments 111 to 116, which each have a relatively large cross-sectional area or a relative small cross-sectional area as measured orthogonally to the dental arch direction, are connected to each other. Therefore, the base segments 111 to 116 have different hardnesses on the opposite sides of the steps S1 to S5 with respect to the dental arch direction. More specifically, the base segments 111 and 116 each have the highest hardness in the base portion 11, and the base segment 114 is a region having a relatively high hardness in the base portion 11. On the other hand, the base segments 113 and 115 are regions each having a low hardness in the base portion 11, and the base segment 112 is a region having a relatively low hardness in the base portion 11. Thus, the base segments 111 to 116 are each configured to have a specific hardness (in other words, a specific inelasticity). Therefore, the orthodontic blocks separated based on the unit regions each including the base segment 111 to 116, the pads 12 and the connection portions 13 can be modified properly for the orthodontic treatment of the dental arch based on the respective orthodontic blocks through the steps S1 to S5 by imparting the base segments 111 to 116 with hardnesses specific to the orthodontic blocks.

Further, the provision of the steps S1 to S5 in the base portion 11 is advantageous in that the movement of the respective teeth and the alignment of the entire dental arch can be simultaneously achieved to thereby collectively orthodontically move the entire dental arch. In particular, the teeth and the dental arch are in an improper state at the initial stage of an orthodontic treatment and, therefore, the modification of the base portion 11 through the steps S1 to S5 is expected to be more effective in that the teeth and the dental arch can be simultaneously orthodontically corrected.

Referring again to FIGS. 1 to 3, the mandibular orthodontic device 10 is formed with interocclusal projections 14, 15, 16 on the occlusal side (the upper side in FIG. 2) of the base portion 11 thereof. The interocclusal projections 14, 15, 16 each have a shape and a height such as to ensure a proper occlusal state with respect to the occlusal surface of an opposed dental arch (the dental arch of an upper jaw in this embodiment) or the occlusal surface of the base portion of a maxillary orthodontic device fitted on the upper jaw dental arch.

The interocclusal projections 14, 15, 16 may be formed integrally with the base portion 11 when the base portion 11 is formed. Alternatively, after the base portion 11 is formed, the occlusal state of the upper and lower dental arches of a patient who wears the mandibular orthodontic device 10 may be checked, and the interocclusal projections 14, 15, 16 may be additionally optimally formed according to the occlusal state.

Here, a background idea of the interocclusal projections 14, 15, 16 will be described.

While the upper jaw is directly joined with a cranial bone and is stationary, the lower jaw is connected to the cranial bone via a jaw joint. Therefore, the lower jaw is influenced by the occlusal state, and is liable to be displaced for easy bite. However, the occlusal state for the easy bite is not necessarily equal to an occlusal state in which the lower jaw is located in an anatomically and physiologically correct position for mastication. Continuing mastication with an incorrect lower jaw position may lead to temporomandibular joint disorder. Therefore, orthodontic treatment goals for occlusion are a dental arch and an occlusal state that ensure occlusion in the correct lower jaw position.

The interocclusal projections 14, 15, 16 assist the positioning of the lower jaw (which is opened and closed about the jaw joint) to close the lower jaw in the correct position. That is, the interocclusal projections 14, 15, 16 prevent the lower jaw from being closed in a forwardly or rearwardly displaced state to thereby maintain the lower jaw in the proper position.

The interocclusal projection 14 is provided on a part of the occlusal surface of the base segment 111 of the base portion 11, for example, corresponding to a left molar. The base segment 111 has a relatively large cross-sectional area as measured longitudinally (in the dental arch direction), and is almost inelastic with a higher hardness. Therefore, the interocclusal projection 14 provided on the occlusal surface of the base segment 111 guides the left posterior portion of the lower jaw for the occlusion in the anatomically and physiologically correct position without leftward and rightward displacement when the mouth is closed with the mandibular orthodontic device 10 fitted on the lower jaw.

The interocclusal projection 16 is provided on a part of the occlusal surface of the base segment 116 of the base portion 11, for example, corresponding to a right molar. The base segment 116 also has a relatively large cross-sectional area as measured longitudinally (in the dental arch direction), and is almost inelastic with a higher hardness. Therefore, the interocclusal projection 16 provided on the occlusal surface of the base segment 116 guides the right posterior portion of the lower jaw for the occlusion in the anatomically and physiologically correct position without leftward and rightward displacement when the mouth is closed with the mandibular orthodontic device 10 fitted on the lower jaw.

The interocclusal projection 15 is provided on a part of the occlusal surface of the base segment 114 of the base portion 11, for example, corresponding to a central incisor or a median plane. The base segment 114 has a relatively large cross-sectional area as measured longitudinally (in the dental arch direction), and is almost inelastic with a higher hardness. Therefore, the interocclusal projection 15 provided on the occlusal surface of the base segment 114 guides the anterior portion of the lower jaw for the occlusion in the anatomically and physiologically correct position without forward and rearward displacement and leftward and rightward displacement when the mouth is closed with the mandibular orthodontic device 10 fitted on the lower jaw.

Further, the maxillary and mandibular orthodontic devices are brought into contact with each other in a correct position between the upper and lower jaws for occlusion, whereby an occlusal force can be applied to the maxillary and mandibular orthodontic devices toward the correct position between the upper and lower jaws. This makes it possible to maintain the maxillary and mandibular orthodontic devices in a physiological occlusal orientation and to move the upper and lower teeth with the occlusal state of the upper and lower teeth properly associated with the occlusal force and the occlusal orientation. In contrast, the occlusal state in an incorrect non-physiological occlusal orientation, i.e., in the displaced lower jaw position, and the occlusal force applied in this state may make the maxillary and mandibular orthodontic devices unstable. Thus, the directions of the movement of the teeth by the maxillary and mandibular orthodontic devices are liable to be deflected due to the incorrect occlusal orientation and the incorrect occlusal force. Therefore, the proper adjustment or setting of the lower jaw position with the interocclusal projections is also expected to be effective in that the maxillary and mandibular orthodontic devices can properly exhibit an improved function.

In this embodiment, the interocclusal projections 14, 16 are provided on the left and right posterior portions of the occlusal surface of the base portion 11, and the interocclusal projection 15 is provided on the anterior portion of the occlusal surface of the base portion 11 by way of example. The number and the positions of the interocclusal projections may be properly set as long as the lower jaw position can ensure the proper occlusion. The number of the interocclusal projections may be four or more. The parts of the base portion 11 on which the interocclusal projections are provided are each preferably inelastic with a higher hardness to ensure the proper occlusion.

FIG. 4 is sectional views each schematically showing the fit (the fitting state) of a part of the mandibular orthodontic device 10 on the molar MT when the mandibular orthodontic device 10 is fitted on the lower jaw dental arch. In FIGS. 4A to 4D, gray-shaded areas each indicate the base portion 11, and cross-hatched areas each indicate the pad 12. Finely dotted areas each indicate the connection portion 13.

As shown in FIG. 4A, the base portion 11 may be configured so that the lower surface thereof is brought into abutment against the entire occlusal surface of the molar MT. The inner surface and the outer surface of the molar MT may be respectively covered with the inner and outer pads 12 connected to the base portion 11 via the connection portions 13 extending from the inner and outer edges of the base portion 11.

As shown in FIG. 4B, the base portion 11 may be configured so that the lower surface thereof is brought into abutment against only one of the cusps of the molar MT and is spaced from the other cusp. In this case, also, the inner surface and the outer surface of the molar MT may be respectively covered with the inner and outer pads 12 connected to the base portion 11 via the connection portions 13 extending from the inner and outer edges of the base portion 11.

As shown in FIG. 4C, the base portion 11 may be configured to have a projection 11C at the center of the lower surface thereof so that the projection 11C is brought into abutment against the center of the molar MT. In this case, also, the inner surface and the outer surface of the molar MT may be respectively covered with the inner and outer pads 12 connected to the base portion 11 via the connection portions 13 extending from the inner and outer edges of the base portion 11.

As shown in FIG. 4D, the base portion 11 may be configured so that the lower surface thereof is entirely spaced from the occlusal surface of the molar MT. In this case, also, the inner surface and the outer surface of the molar MT may be respectively covered with the inner and outer pads 12 connected to the base portion 11 via the connection portions 13 extending from the inner and outer edges of the base portion 11.

In FIGS. 4A to 4D, a reference character G denotes gum.

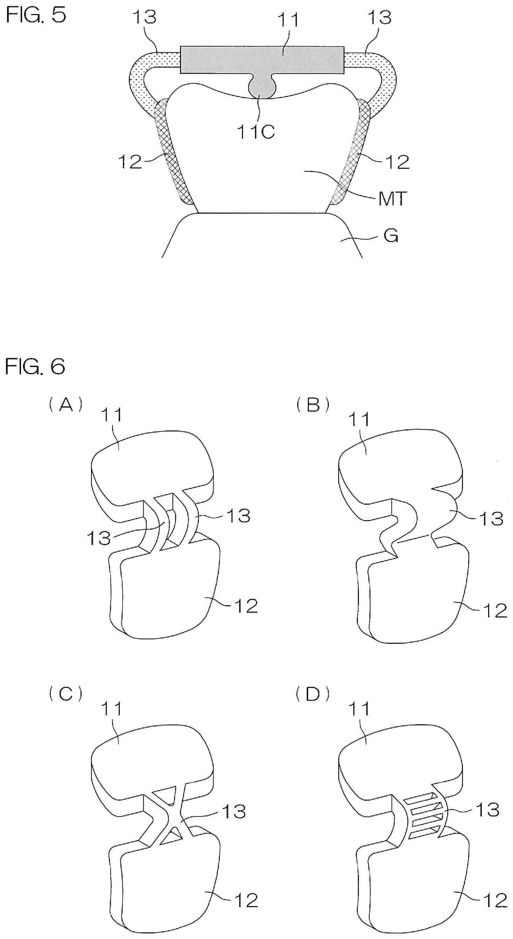

FIG. 5 is a sectional view schematically showing the fit (the fitting state) of a part of the mandibular orthodontic device 10 on the molar MT by way of another example when the mandibular orthodontic device 10 is fitted on the lower jaw dental arch.

As shown in FIG. 5, the base portion 11 may be formed with a projection 11C at the center of the lower surface thereof so that the projection 11C is brought into abutment against the center of the occlusal surface of the molar MT and the base portion 11 is spaced from the occlusal surface of the molar MT. The connection portions 13 respectively extending from the inner and outer edges of the base portion 11 may be each configured to have a smaller width and to be curved to project outward so that elastic forces can be applied inward to the connection portions 13. With this arrangement, the pads 12 can be pressed against the surfaces of the molar MT by the elastic forces of the connection portions 13.

In the arrangements shown in FIGS. 4A to 4D and 5, the connection portions 13 may be formed of a shape memory resin so that the connection portions 13 can restore their shapes in a direction in which the pads 12 are pressed against the surfaces of the molar MT when the mandibular orthodontic device 10 is fitted on the lower jaw dental arch and warmed by the mouth temperature.

In the arrangements shown in FIGS. 4A to 4D and 5, the base portion 11 may be formed of a shape memory resin so that the base portion 11 can restore its shape to be brought into pressure contact with the surface of the molar MT by warming the mandibular orthodontic device 10 by the mouth temperature after the mandibular orthodontic device 10 is deformed for easy fitting and fitted on the lower jaw dental arch.

In the arrangements shown in FIGS. 4A to 4D and 5, the pads 12 may be formed of a shape memory resin so that the pads 12 can retore their shapes to be brought into abutment against (into pressure contact with) the surface of the molar MT by warming the mandibular orthodontic device 10 by the mouth temperature after the mandibular orthodontic device 10 is fitted on the lower jaw dental arch.

FIG. 6 is schematic diagrams illustrating exemplary structures of the connection portion 13 that fixes the pad 12 to the base portion 11. In FIGS. 6A to 6D, the base portion 11 is not entirely shown, but only a part of the base portion 11 connected to the connection portion 13 is shown.

As shown in FIG. 6A, the connection portion 13 connecting the base portion 11 to the pad 12 may be in the form of a pair of smaller-width rods (two smaller-width rods) that are gently curved to project outward. Where the connection portion 13 is in the form of a pair of rods curved to project outward, it is possible to impart the connection portion 13 with inward elasticity. Therefore, the pad 12 can be elastically brought into pressure contact with the surface of the tooth by the elasticity of the connection portion 13.

As shown in FIG. 6B, the connection portion 13 may be in the form of a thin plate curved, for example, in an S-shape as seen from a lateral side. Where the connection portion is in the form of an S-shaped thin plate, it is possible to impart the connection portion 13 with inward elasticity. Therefore, the pad 12 can be elastically brought into pressure contact with the surface of the tooth by the elasticity of the connection portion 13.

As shown in FIG. 6C, the connection portion 13 may have an X-shape. Further, as shown in FIG. 6D, the connection portion 13 may have a ladder-like shape.

In brief, the connection portion 13 is merely required to have elasticity to elastically urge the pad 12 toward the surface of the tooth.

In the present invention, it is desirable in terms of productivity that the base portion 11, the pads 12 and the connection portions 13 of the mandibular orthodontic device are integrally formed of a resin material. Therefore, the connection portions 13 are each formed of the resin material as having a relatively small thickness and a relatively small width and imparted with elasticity in a desired direction.

Where the base portion 11, the pads 12 and the connection portions 13 are integrally formed of a resin material containing the shape memory resin, easier production can be ensured with the use of a 3D printer.

Where the connection portions 13 and the pads 12 are formed of the shape memory resin, as described above, a multi-head 3D printer may be used so that the connection portions 13 and the pads 12 are formed of the shape memory resin and the base portion 11 is formed of a resin having no shape memory property.

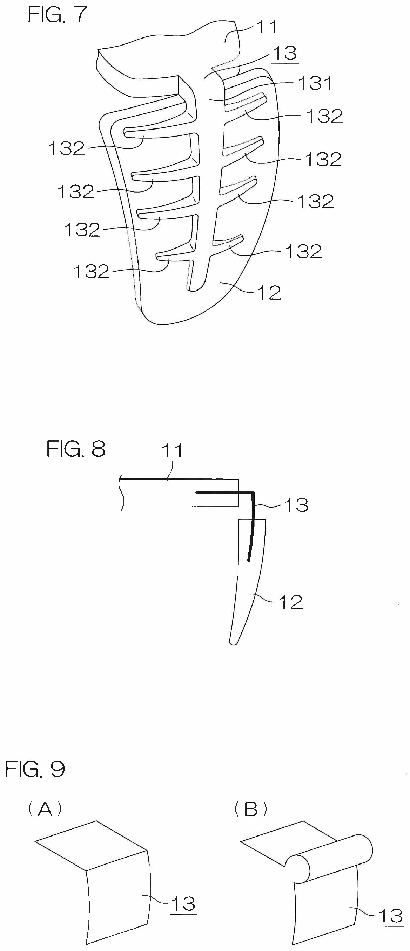

FIG. 7 is a schematic diagram showing another example of the connection portion 13 that connects the pad 12 to the base portion 11. The connection portion 13 may be configured to include an elongated rod-shaped main body 131 and support bars 132 extending laterally from the main body 131. The connection portion 13 may have a thickness and a width such as to be entirely imparted with elasticity in a desired direction.

Where the connection portion 13 has such a structure, the connection portion 13 elastically support the pad 12 so that the pad 12 can be elastically brought into pressure contact with the surface of the tooth.

The structure shown in FIG. 7 can be also integrally formed of the resin material with the use of a 3D printer.

FIG. 8 is a side sectional view schematically showing further another example of the connection portion 13 that connects the pad 12 to the base portion 11. The base portion 11 and the pad 12 may be each formed of a resin material, and connected to each other by the connection portion 13, which may be made of, for example, a thin metal plate. Where the connection portion 13 of the thin metal plate has a shape shown in FIG. 9A or 9B, for example, the connection portion 13 can generate the elastic force in a direction in which the pad 12 is brought into pressure contact with the surface of the tooth with respect to the base portion 11.

In the above description, the pads 12 are individually brought into pressure contact with or into abutment against the respective teeth of the dental arch. Alternatively, the pads 12 may be each collectively brought into pressure contact with or into abutment against a plurality of neighboring teeth, for example, in a given orthodontic block.

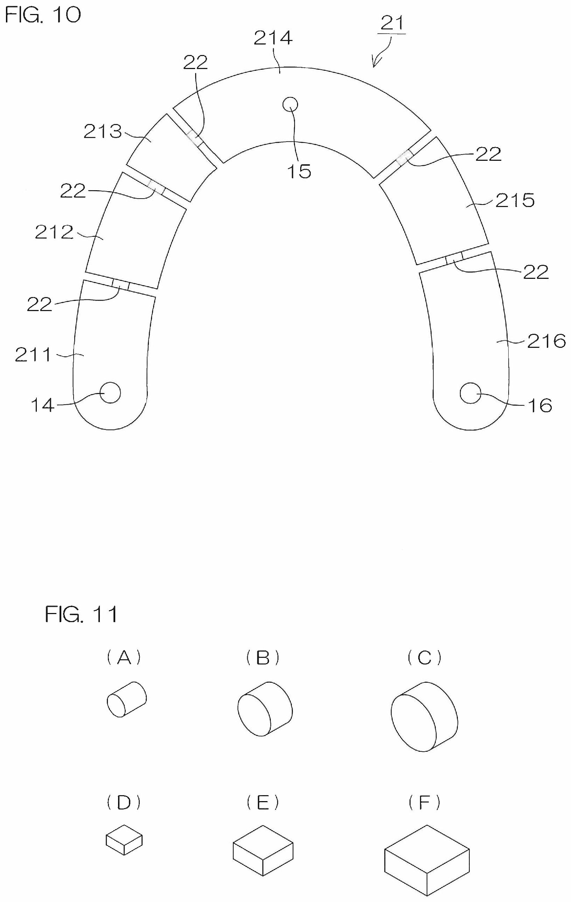

FIG. 10 is a diagram showing a base portion 21 different in structure from that of the mandibular orthodontic device 10 according to the embodiment of the present invention. FIG. 10 schematically illustrates the mandibular orthodontic device 10, as seen in plan from the occlusal side, in comparison with the base portion 11 shown in FIG. 2, wherein only the base portion 21 is shown with the pads 12 and the connection portions 13 omitted to avoid complication.

Referring to FIG. 10, the base portion 21, which has a horseshoe shape conforming to the shape of the lower dental arch, is divided into a plurality of base segments 211 to 216. Though not shown in FIG. 10, the base segments 211 to 216 are each provided with pads via connection portions. Thus, the base segments 211 to 216 each constitute an orthodontic block together with the pads and the connection portions based on unit regions.

The base segments 211 to 216 are each configured to have a predetermined width (as measured horizontally orthogonally to the longitudinal direction of the dental arch) and a predetermined thickness. The widths and the thicknesses of the base segments 211 to 216 may be equal to the widths and the thicknesses of the base segments 111 to 116 described with reference to FIG. 2 by way of example. That is, the base segments 211 to 216 may each have a specific width and a specific thickness. In another example, the base segments 211 to 216 may have the same width and the same thickness.

In further another example, the base segments 211 to 216 may be formed of different resin materials having different elastic moduli.

Characteristic features of the base portion 21 shown in FIG. 10 are that a small gap is provided between each adjacent two of the base segments 211 to 216 to separate the adjacent base segments from each other, and that the separated adjacent base segments are connected to each other by a joint member 22.

For example, the joint member 22 may be a short columnar body having a round sectional shape (or an oval sectional shape) as shown in FIG. 11A, 11B or 11C, or may be a short columnar body having a rectangular sectional shape as shown in FIG. 11D, 11E or 11F.

In this embodiment, the base portion 21 is integrally formed of a relatively hard resin material having a predetermined elastic modulus. Specifically, the base segments 211 to 216 and a plurality of joint members 22 (five joint members 22 in this embodiment) connecting the base segments 211 to 216 to each other are integrally formed of the resin material. As in the embodiment described with reference to FIGS. 1 to 3, the pads are fixed to the base portion 21 via the connection portions. The base portion 21, the pads and the connection portions may be integrally formed of the resin material, for example, with the use of a 3D printer.

By adjusting the cross-sectional areas or the volumes of the joint members 22, intersegment flexibilities between the base segments can be differently set, making it possible to adjust the elasticities of the base segments 211 to 216 in a direction intersecting the dental arch direction.

Further, the joint members 22 may be formed of a material different from the resin material for the base segments 211 to 216, e.g., a silicone resin or a rubber. This also makes it possible to adjust the elasticities of the base segments 211 to 216.

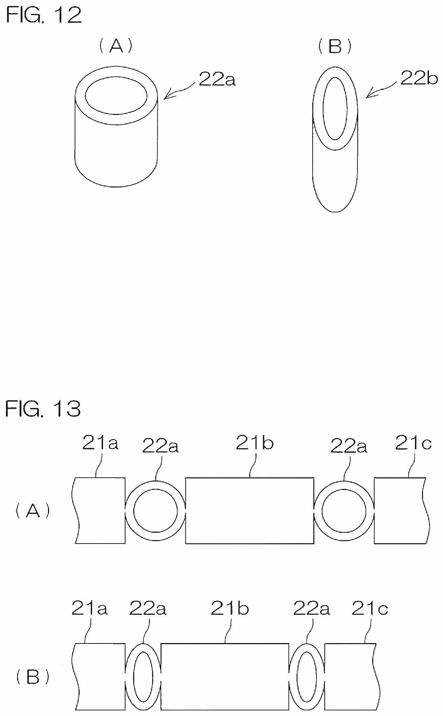

FIG. 12 is perspective views showing other exemplary structures of the joint member. As shown in FIG. 12A, the joint member may be a joint member 22a having an annular shape or a short hollow cylindrical shape. Alternatively, the joint member may a joint member 22b having a flattened annular shape or a flattened short hollow cylindrical shape as shown in FIG. 12B. The joint members 22a, 22b are elastic, and each have an elastic force to restore the initial shape thereof. Where the joint members 22a, 22b are hollow annular bodies each having a restoration elasticity to restore the initial shape thereof, the base segments can be elastically urged by the joint members 22a, 22b into a state such that the intersegment gaps are relatively expanded or into a state such that the intersegment gaps are relatively narrowed.

FIG. 13 is plan views each showing a part of the base portion 21 as viewed from the occlusal side. The base portion 21 is divided into a plurality of base segments 21a, 21b, 21c, which are separated from each other. In FIG. 13A, the base segment 21a and the base segment 21b are connected to each other, and the base segment 21b and the base segment 21c are connected to each other by the joint members 22a. In FIG. 13B, also, the base segment 21a and the base segment 21b are connected to each other, and the base segment 21b and the base segment 21c are connected to each other by the joint members 22a. The joint members 22a each have an annular shape as seen in plan and, therefore, when the base portion 21 is fitted on the dental arch in a state with the joint members 22a each compressed as shown in FIG. 13B, the base portion 21 is liable to return to a state shown in FIG. 13A. In contrast, when the base portion 21 including the base segments 21a, 21b, 21c connected to each other by the joint members 22b is fitted on the dental arch in the state shown in FIG. 13A, the base portion 21 is liable to return to the state shown in FIG. 13B.

Where the joint members 22a or the joint members 22b each deformable in the dental arch direction with an elastic force are thus used as the joint members to connect the base segments 21a, 21b, 21c to each other, the elasticity can be exhibited in the direction intersecting the dental arch direction and, in addition, the base segments 21a, 21b, 21c can be each imparted with an elastic force in the dental arch direction.

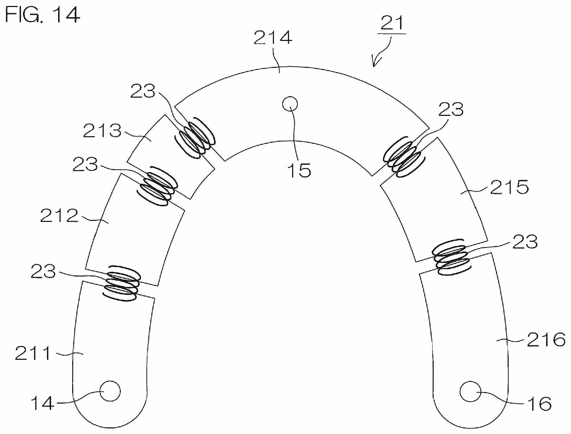

FIG. 14 is a diagram showing an arrangement in which neighboring base segments 211 to 216 of the base portion 21 shown in FIG. 10 are connected to each other by joint members 23.

In FIG. 14, metal coil springs are used as the joint members 23 by way of example. The joint members 23 to be used may each have a spring force such as to elastically urge the base segments in an intersegment gap expanding direction. Alternatively, the joint members 23 to be used may each have a spring force such as to elastically urge the base segments in an intersegment gap narrowing direction. Further, the joint members 23 to be used may each have a spring force such as to maintain the intersegment gaps and to increase the elastic force to be applied between the neighboring base segments. As the joint members 23 for the connection between the base segments 211 to 216, coil springs having the same function (the same spring force) may be used, or coil springs having different functions (different spring forces) may be used in consideration of the elastic forces to be applied to the respective base segments 211 to 216.

By thus dividing the base portion 21 into the plurality of base segments 211 to 216 and connecting the base segments to each other by the joint members 23, the forces can be applied to move the orthodontic blocks of the mandibular orthodontic device 10 in the dental arch direction. Therefore, the mandibular orthodontic device 10 is contributable to the orthodontic treatment of the dental arch based on the orthodontic blocks.

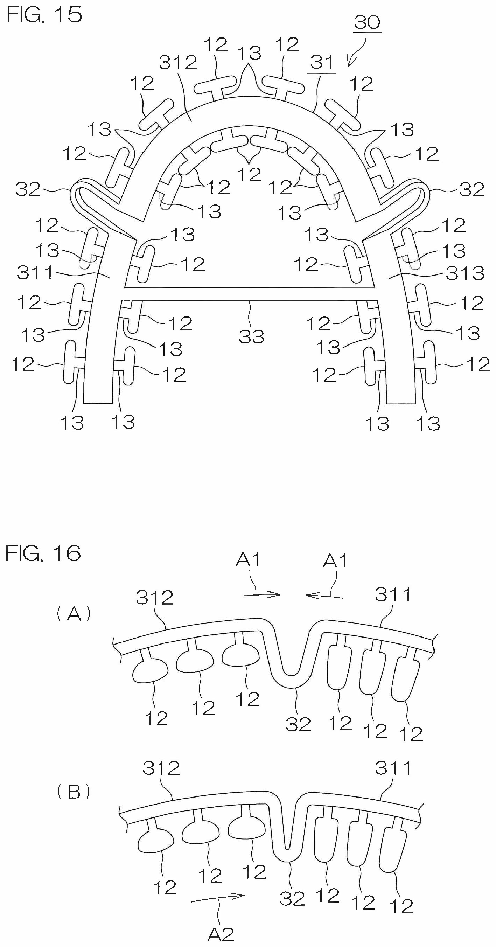

FIG. 15 is a schematic plan view illustrating a mandibular orthodontic device 30 according to another embodiment of the present invention as viewed from the occlusal side.

Referring to FIG. 15, the mandibular orthodontic device 30 includes a horseshoe-shaped base portion 31 conforming to the shape of a dental arch, a plurality of pads 12 covering a lower dental arch, and a plurality of connection portions 13 connecting the respective pads 12 to the base portion 31 to fix the pads 12 to the base portion 31.

The base portion 31 is divided, for example, into three base segments 311, 312, 313 in the dental arch direction. The base segment 311 and the base segment 312 are connected to each other by a joint member 32 U-curved in a direction intersecting the dental arch direction. Further, the base segment 312 and the base segment 313 are connected to each other by a joint member 32 U-curved in the direction intersecting the dental arch direction. It is preferred in terms of productivity to integrally form the base segments 311, 312, 313 and the joint members 32 from a resin material. Missing tooth spaces resulting from the extraction of teeth (extracted tooth spaces) are present in association with a gap between the base segment 311 and the base segment 312 and a gap between the base segment 312 and the base segment 313. The joint members 32 are provided in order to close the extracted tooth spaces.

FIG. 16 is diagrams each schematically showing a state in which the extracted tooth space is closed with the joint member 32.

As shown in FIG. 16A, the joint member 32 is elastic in a U-shape converging direction (indicated by an arrow A1). Therefore, the base segment 311 and the base segment 312 connected to each other by the joint member 32 are constantly elastically urged toward each other with their ends approaching each other. As a result, as shown in FIG. 16B, the front base segment 312 which supports an anterior tooth portion is typically moved toward the base segments 311, 313 which support molar portions, as indicated by an arrow A2. Thus, the pads 12 fixed to the base segment 311 and the base segment 312 move the respective teeth in the dental arch direction to orthodontically correct the tooth alignment in the dental arch direction to narrow the extracted tooth space.

Referring again to FIG. 15, the base segment 311 and the base segment 313 are connected to each other by a laterally extending connection enhancement member 33 in the mandibular orthodontic device 30.

The base segment 311 supports a left lower molar portion, and the base segment 313 supports a right lower molar portion. By connecting the left base segment 311 and the right base segment 313 to each other by the connection enhancement member 33, therefore, the left posterior orthodontic block and the right posterior orthodontic block are unified to provide a strong fixing force against the movement in the dental arch direction.

Therefore, the base segment 312 of the orthodontic block for the anterior tooth portion can be more reliably moved rearward by elastic forces generated by the joint members 32.

The connection enhancement member 33 may be a member having a longitudinally elastically urging force or, conversely, may be a member having an elastically urging force to be applied in a longitudinally compressing direction. In the former case, where the width of the dental arch (between the base segment 311 and the base segment 313) before the movement is to be increased, the orthodontic force to be applied to increase the actual dental arch width can be enhanced. In the latter case, where the width of the dental arch (between the base segment 311 and the base segment 313) before the movement is to be reduced, the orthodontic force to be applied to reduce the actual dental arch width can be enhanced.

In the case of the mandibular orthodontic device 30 shown in FIG. 15, the joint member 32 connecting the base segment 311 to the base segment 312 and the joint member 32 connecting the base segment 312 to the base segment 313 are formed of the resin material integrally with the base portion 31. However, the present invention is not limited to this arrangement, but the joint members 32 may be each made of a metal coil spring having a spring force in a compressing direction.

In the above, the mandibular orthodontic devices according to the embodiments have been described by way of example, but the present invention is applicable likewise to a maxillary orthodontic device.

The present invention is not limited to the embodiments described above, but various modifications may be made within the scope of the appended claims.

The features of the present invention, the modifications of the present invention, and the like will be described below.

It is desirable in terms of production, costs and accuracy that all the base portion, the connection portions, the pads, the joint members, the connection enhancement member and the interocclusal projections, which constitute the unique arrangements of the present invention, are integrally formed of the resin material containing the shape memory resin by CADCAM. Even with the use of the shape memory resin, the elasticity is reduced at a certain temperature in a current situation. However, the resin can exhibit the elasticity depending on the thickness and the shape thereof. The shape restoring force of the shape memory resin can be utilized for the orthodontic forces. Therefore, the elastic force exhibited and adjusted by adjusting the shape and the thickness of the resin is also a feature of the present invention.

However, there is spatial restriction on the adjustment of the shapes of the base portion and the connection portions due to the sizes of the teeth and the like, so that the range of the elastic force to be exhibited by the resin is also limited. In the present invention, therefore, springs or coils of a metal material containing a shape memory alloy instead of the resin or a material such as silicone or rubber other than the resin may be incorporated in the elastic bodies for the base portion and the connection portions. This ensures the effectiveness of the orthodontic device. By the incorporation of the material other than the resin in the elastic bodies, the dimensions of the elastic bodies may be standardized. This makes it possible to ensure the compatibility of the elastic bodies in the CADCAM production and the subsequent assembling operation and to minimize problems associated with production costs, production error (accuracy) and the like.

In the present invention, the pads are configured to each have a minimum size necessary to hold the tooth and to separate the teeth from each other to cause the base portion to support the reaction of the orthodontic force applied to each of the teeth from the pads, whereby undesired reaction to be transmitted to the other teeth can be minimized. In the case of the multibracket orthodontic device, the teeth are connected together by the single arch wire and, therefore, the reaction of the orthodontic force applied to each of the teeth is directly applied to the neighboring teeth. In the case of the sheet-type mouthpiece orthodontic device configured to cover all the teeth, the reaction of the orthodontic force is transmitted obviously to the neighboring teeth and to the entire device, whereby the device is liable to be deformed to apply the reaction to the entire dental arch. Particularly, the reaction is liable to concentrate on the anterior tooth portion located in the middle of the horseshoe shape and on the molar portions located at the opposite ends of the horseshoe shape.

The base portion is desirably less elastic or as inelastic as possible in order to absorb the reaction from the pads. Further, the gripping force of the pad pair, i.e., the gripping force exhibited by the pad pair, and the orthodontic force are provided by the elastic force of the connection portion. Therefore, the elastic force can be precisely adjusted by variously setting the thickness and the shape of the connection portion. The precise adjustment makes it possible to optimally exhibit the orthodontic force, i.e., in the most painless manner and in the most efficiently movable manner. In order to cause the pad pair to exhibit an optimum gripping force and an optimum orthodontic force, it is necessary to maintain the three-dimensional positional relationship between the connection portion and the pad pair as designed. For this purpose, the base portion is also desirably less elastic or as inelastic as possible. For the improvement of the conformability of the device to the dental arch and for the orthodontic efficiency of the device in the orthodontic treatment of the teeth and the dental arch shape, however, it is desirable that the base portion has a higher elasticity. In order to cause the pad pair to properly exhibit the orthodontic force on each tooth in the present invention, therefore, a part of the base portion supporting the pads of the pad pair is imparted with inelasticity, and the other part of the base portion is imparted with elasticity. This makes it possible to optimize the fitting accuracy of the device, the orthodontic force to be exhibited on the entire dental arch, and the gripping forces and the orthodontic forces to be exhibited on the respective teeth by the pad pairs.

In some case such as microdontia or severe dental crowding, however, it is difficult to provide a highly elastic area in the base portion. In this case, the base portion may be entirely imparted with a proper elasticity. Even in this case, the fitting accuracy of the device, the orthodontic force to be exhibited on the entire dental arch, and the orthodontic forces to be properly exhibited on the respective teeth by the pad portion can be adjusted in optimum balance by dividing the base portion based on the desired regions, and gradationally setting the thickness and the width (volume) of the resin to adjust the magnitude of the elasticity.

The devices according to various detailed embodiments of the present invention can be integrally formed of the resin material containing the shape memory resin with the use of the CADCAM. In addition, the portions of the devices can be each imparted with a specific elasticity or inelasticity by variously setting the size, the thickness and the shape of the resin material. Thus, the removable pad-type mouthpiece orthodontic device, which is expected to be more efficient and more effective than the existing orthodontic treatment methods (e.g., the multibracket orthodontic treatment method which is most effective so far, and the sheet-type mouthpiece orthodontic treatment method which is less effective but meets high patient needs), can be realized and, in addition, can be produced at lower costs at higher accuracy.

This application corresponds to Japanese Patent Application No. 2023-202928 filed to Japan Patent Office on November 30, 2023, the disclosure of which is entirely incorporated herein by reference.

### DESCRIPTION OF REFERENCE CHARACTERS

10: Mandibular orthodontic device
11, 21, 31: Base portions
11C: Projection
12: Pads
13: Connection portions
14, 15, 16: Interocclusal projections
22, 22a, 22b, 23, 32: Joint members
21a, 21b, 21c: Base segments
30: Mandibular orthodontic device
33: Connection enhancement member
111, 112, 113, 114, 115, 116, 211, 212, 213, 214, 215, 216, 311, 312, 313: Base segments
131: Main body
132: Support bars

## Claims

1. A pad-type mouthpiece orthodontic device comprising:
a horseshoe-shaped base portion conforming to a shape of a dental arch;
a pad pair portion for individually covering each tooth of the dental arch or collectively covering plural teeth of the dental arch; and
a connection portion that fixes the pad pair portion to the base portion;
wherein the base portion is divided into a plurality of base segments based on desired unit regions, and the base segments each constitute an orthodontic block together with the connection portion and the pad pair portion;
wherein the base segment of the orthodontic block is configured to have elasticity or inelasticity specific to the block.

2. The pad-type mouthpiece orthodontic device according to claim 1, wherein the pad pair portion comprises a pad pair conforming to a surface of a tooth crown, and comprising an outer tooth surface pad that covers an outer side (a labial side or a buccal side) of the tooth crown and an inner tooth surface pad that covers an inner side (a lingual side) of the tooth crown, centering on the tooth crown.

3. The pad-type mouthpiece orthodontic device according to claim 2,
wherein the connection portion comprises an outer connection portion that fixes the outer tooth surface pad to the base portion and an inner connection portion that fixes the inner tooth surface pad to the base portion,
wherein the connection portion has a predetermined elasticity so that the outer connection portion can elastically urge the outer tooth surface pad with respect to the base portion in a direction such as to press the tooth surface inward and the inner connection portion can elastically urge the inner tooth surface pad with respect to the base portion in a direction such as to press the tooth surface outward.

4. The pad-type mouthpiece orthodontic device according to claim 2 or 3, wherein at least one of the outer tooth surface pad and the inner tooth surface pad has elasticity such that the tooth surface pad can elastically urge itself toward the tooth surface.

5. The pad-type mouthpiece orthodontic device according to claim 1, wherein the base portion, the pad pair portion and the connection portion are integrally formed.

6. The pad-type mouthpiece orthodontic device according to claim 5, wherein the base portion, the pad pair portion and the connection portion are integrally formed of a resin material.

7. The pad-type mouthpiece orthodontic device according to claim 5, wherein the base portion and the pad pair portion are made of a resin material, and the connection portion is made of a metal material.

8. The pad-type mouthpiece orthodontic device according to claim 1, wherein the base portion has a boundary that extends in a direction intersecting a dental arch extending direction and divides the base portion based on the desired unit regions.

9. The pad-type mouthpiece orthodontic device according to claim 8, wherein the boundary comprises a division end surface that physically divides the base portion.

10. The pad-type mouthpiece orthodontic device according to claim 9, wherein division end surfaces of each adjacent two of the base segments are connected to each other via an elastic body.

11. The pad-type mouthpiece orthodontic device according to claim 8, wherein the boundary comprises a joint portion between a base segment having a relatively large cross-sectional area and a base segment having a relatively small cross-sectional area.

12. The pad-type mouthpiece orthodontic device according to claim 1, wherein a predetermined base segment out of the plurality of base segments is an inelastic body having inelasticity.

13. The pad-type mouthpiece orthodontic device according to claim 12, wherein the inelastic base segment is made of a resin material, and has a greater volume so as to be imparted with the inelasticity.

14. The pad-type mouthpiece orthodontic device according to any one of claims 1 to 3,
wherein base segments to be located on left and right posterior portions of the dental arch out of the base portion are respectively formed with interocclusal projections on occlusal surfaces thereof so as to ensure a proper occlusal state with respect to an occlusal surface of an opposed dental arch or an occlusal surface of a base portion of an orthodontic device fitted on the opposed dental arch,
wherein a base segment to be located on an anterior portion of the dental arch out of the base portion is formed with an interocclusal projection on an occlusal surface thereof so as to ensure a proper occlusal state with respect to the occlusal surface of the opposed dental arch or the occlusal surface of the base portion of the orthodontic device fitted on the opposed dental arch.

15. A pad-type mouthpiece orthodontic device comprising:
a horseshoe-shaped base portion conforming to a shape of a dental arch;
a pad pair portion for individually covering each tooth of the dental arch or collectively covering plural teeth of the dental arch; and
a connection portion that fixes the pad pair portion to the base portion;
wherein the base portion, the connection portion and the pad pair portion are integrally formed of a resin material containing a shape memory resin, and sizes, thicknesses and shapes of the base portion, the connection portion and the pad pair portion are variously set so that a part of the base portion connected to the connection portion is configured to have inelasticity and the connection portion and the pad pair portion are each configured to have a specific elasticity.

16. A pad-type mouthpiece orthodontic device comprising:
a horseshoe-shaped base portion conforming to a shape of a dental arch;
a pad pair portion for individually covering each tooth of the dental arch or collectively covering plural teeth of the dental arch; and
a connection portion that fixes the pad pair portion to the base portion;
wherein the base portion is divided into a plurality of base segments based on desired unit regions, and the base segments each constitute an orthodontic block together with the connection portion and the pad pair portion;
wherein the base segment of the orthodontic block is configured to have inelasticity specific to the block.
